# EUROPEAN PATENT SPECIFICATION

(11) **EP 2 130 433 B1**
(45) Date of publication and mention of the grant of the patent: **14.02.2018**
(21) Application number: 09251474.4
(22) Date of filing: 03.06.2009
(51) Int. Cl.: A01K 97/04

(54) **Angler's method feeder mould**
Form für Angelködervorrichtung
Moule pour dispositif d'appât de pêche

(30) Priority: 03.06.2008 GB 0810071
(43) Date of publication of application: 09.12.2009
(73) Proprietor: Preston Innovations Limited, Telford Shropshire TF3 3BD (GB)
(72) Inventor: Preston, David, Shropshire, TF3 3BD (GB)
(74) Representative: Wynne-Jones, Lainé and James LLP

(56) References cited:
- WO-A-85/03200
- GB-A- 1 299 869
- GB-A- 2 403 389
- US-A- 2 846 803

## Description

This invention relates to method feeder moulds for assisting anglers to form ground bait balls around method feeders, to produce a uniform and compacted shape of bait around the feeder.

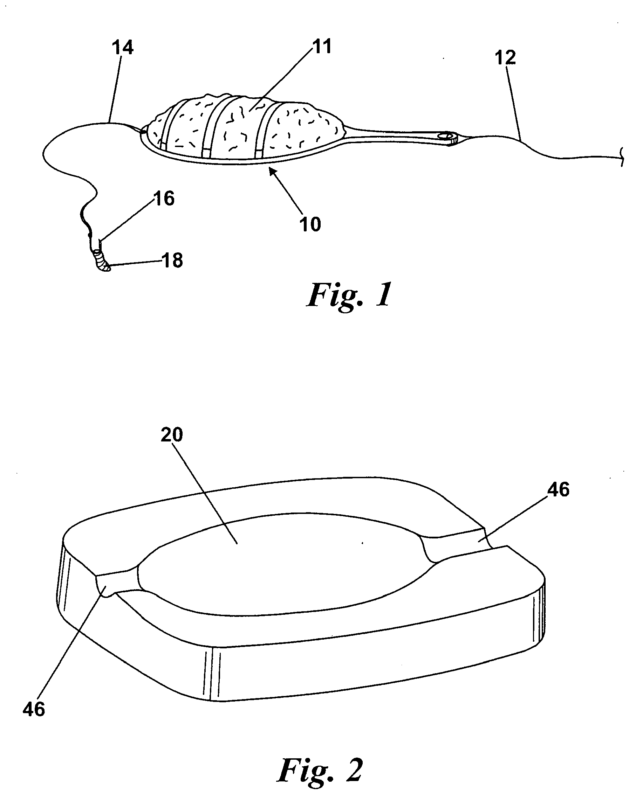

Modern day anglers increasingly use a method of fishing that incorporates a weighted feeder 10 as shown in Figure 1 of the accompanying drawings, loaded with a ball of small bait particles that have been mixed together with water to form what is termed as 'ground bait'. The feeder 10 comprises a frame with open spaces into and around which the bait 11 may be compacted so that it adheres to the feeder. Tied to the feeder 10 at one end is the fishing line 12 running to the angler's rod, and at the other end is a short length of fishing line 14 with a hook 16 tied on and a hook bait 18 attached. This setup is commonly known as a 'method feeder' fishing rig.

The above described 'method feeder' rig is cast by the angler into the targeted area of water, it then sinks to the bottom of the lake or river. As soon as the rig enters the water the ground bait particles begin to break up and dissolve and disperse in to the surrounding water due to saturation of the lake water into the ground bait, and this process continues as the rig lies on the lakebed.

Fish are attracted to the feeder rig by the small bait particles and begin to feed on them. At some stage during this feeding period a fish will take the bait that is attached to the hook length and become hooked.

Previously anglers have used plain moulds 20 as shown in Figure 2 to assist in the forming of ground bait around method feeders, but these are only effective if the consistency of the moisture of the ground bait is mixed perfectly. If the ground bait mix is too wet or too dry the ground bait sticks to the mould instead of the feeder when the angler attempts to remove the feeder from the mould. It will be appreciated that the plain curved mould recess causes a suction effect that tends to place the moulded bait in tension as the feeder is removed from the mould, and so the pulling action can cause the bait mass to weaken or disintegrate.

This invention seeks to provide a more effective mould for the forming of ground bait on to feeders, by adding a feature which enables the baited feeder to be removed from a mould without loss of bait from the feeder.

Accordingly in one aspect this invention provides a method feeder mould comprising a mould body having a mould surface or surfaces defining an open mould cavity, wherein at least a part of the surface or surfaces are moveable to assist release in use of a loaded ground bait feeder from the mould, the movable surface or surfaces are provided on an element slidably movable with respect to the mould body.

The cavity is preferably of generally concave form. Thus the cavity conveniently has a rounded base from which upstands a side wall of generally parallel-sided from and parallel to the axis of movement of the movable surface or surfaces. The movable surface or surfaces are preferably biased towards a moulding position and moveable against the bias to a release position.

The element may include a concave portion which cooperates with a sidewall on the mould body to provide the mould surfaces. The mould body may have two grooves at opposite edges of said mould cavity and generally in a plane transverse to the release direction, for receiving the opposite ends of a feeder in use.

Whilst the invention has been described above it extends to any inventive combination of the features set out above or in the following description or claims.

The invention may be performed in various ways and, by way of example only, certain specific embodiments will now be described, reference being made to the accompanying drawings, in which:-
Figure 1 is a view of a method feeder loaded with compacted ground bait and attached to a fishing line;
Figure 2 is a perspective view of a known form of method feeder mould;
Figures 3(a) and 3(b) are longitudinal section views through a mould feeder of this invention with a moveable floor in the moulding position and the release position respectively;
Figure 4 is a section view of an arrangement similar to that of Figure 4 but with a false floor; and
Figure 7 is a top plan view of a method feeder mould in accordance with an embodiment of the invention.

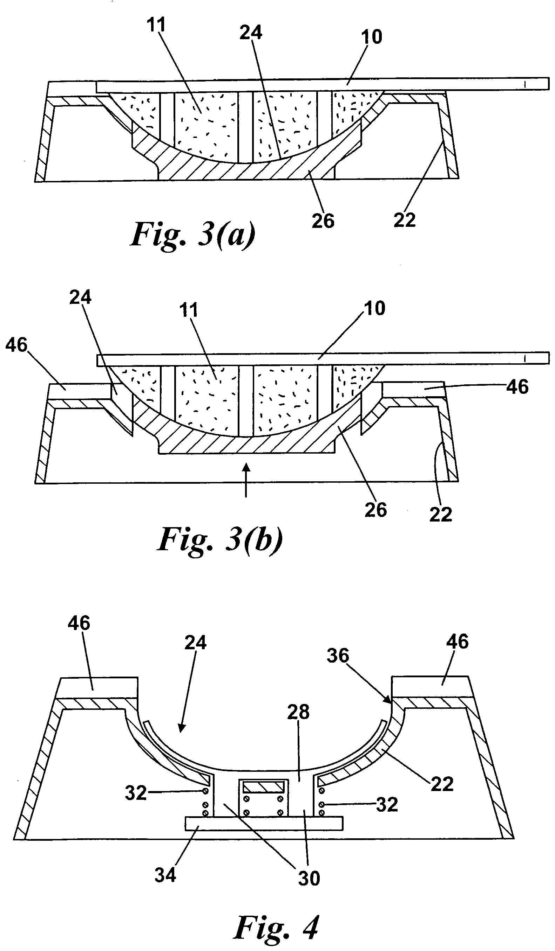

Referring initially to the first embodiment, the method feeder comprises a body in the form of a moulded plastics shell 22 defining a half-ovoid shaped moulding cavity 24. The shell stops short of the base of the cavity and a moveable mould floor 26 is mounted for sliding movement in the body between the moulding position shown in Figure 3(a) and the release position shown in Figure 3(b). The mould floor is biased to the moulding position of Figure 3(a).

In use the angler fills the mould with ground bait or pellets 11 and then firmly presses the feeder 10 into the mould so that the ground bait or pellets compact and adhere to the feeder. The moveable floor 26 is then pushed upwardly as shown in Figure 3(b) to shift the formed mass of ground bait upwardly in the mould to release it from the outer periphery of the mould surface. The feeder and moulded ground bait can then be eased off the mould.

Figure 4 illustrates a slight variation to the arrangement shown in Figures 3(a) and 3(b). Here the moveable element 28 is a false floor in the mould cavity which has two legs which protrude through the cavity wall each carrying a biasing spring 32 and being connected by a common push plate 34 so as to bias the floor into its lower (moulding) position as shown. It will be noted here that the peripheral wall region 36 of the fixed mould cavity that contacts the bait is generally vertical so that the removal action is one of sliding over rather then pulling away from the surface.

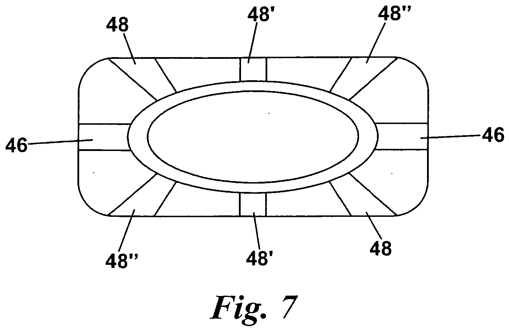

Finally, referring to Figure 7, in the above embodiment, a pair of diametrically opposed grooves 46 are provided at opposite ends of the mould cavity for receiving the ends of the feeder. As shown in Figure 7 further pairs of grooves, 48, 48', 48" may be provided around the periphery of the mould to allow the feeder to be disposed at different angular positions within the mould.

## Claims

1. A method feeder mould comprising a mould body having a mould surface or surfaces (22) defining an open mould cavity (24), wherein at least a part (26, 44) of the surface or surfaces is movable to assist release in use of a loaded ground bait feeder (10,11) from the mould; **characterized in that** the movable surface or surfaces (26, 28, 44) are provided on an element slidably movable with respect to the mould body.

2. A method feeder mould according to claim 1, wherein the cavity (24) is of generally concave form.

3. A method feeder mould according to Claim 1 or Claim 2, wherein the cavity (24) has a rounded base from which upstands a side wall (36) of generally parallel-sided form and parallel to the axis of movement of the movable surface or surfaces (26, 28, 44).

4. A method feeder mould according to any of the preceding Claims, wherein the movable surface or surfaces (26, 28, 44) are biased towards a moulding position and movable against the bias to a release position.

5. A method feeder mould according to Claim 1, wherein the element includes a concave portion (26, 28) which cooperates with a sidewall (36) on the mould body to provide the mould surfaces.

6. A method feeder mould according to any preceding Claim, wherein said mould body comprises two grooves (46) at opposite edges of said mould cavity and generally in a plane transverse to the release direction, for receiving the opposite ends of a feeder in use.

## Patentansprüche

1. Method-Feeder-Formwerkzeug, das einen Formwerkzeugkörper mit einer Formwerkzeugoberfläche oder -oberflächen (22) umfasst, die einen offenen Formwerkzeughohlraum (24) festlegt oder festlegen, wobei mindestens ein Teil (26, 44) der Oberfläche oder Oberflächen so bewegbar ist, dass bei der Verwendung eines beladenen Grundköder-Feeders (10, 11) eine Freigabe von dem Formwerkzeug unterstützt wird; **dadurch gekennzeichnet, dass** die bewegbare(n) Oberfläche oder Oberflächen (26, 28, 44) auf einem Element bereitgestellt ist oder sind, das in Bezug auf den Formwerkzeugkörper gleitend bewegbar ist.

2. Method-Feeder-Formwerkzeug nach Anspruch 1, bei dem der Hohlraum (24) eine im Allgemeinen konkave Form aufweist.

3. Method-Feeder-Formwerkzeug nach Anspruch 1 oder Anspruch 2, bei dem der Hohlraum (24) eine gerundete Basis aufweist, von der eine Seitenwand (36) aufrecht vorragt, die eine im Allgemeinen parallelseitige Form aufweist und die parallel zur Achse der Bewegung der bewegbaren Oberfläche oder Oberflächen (26, 28, 44) ist.

4. Method-Feeder-Formwerkzeug nach einem der vorhergehenden Ansprüche, bei dem die bewegbare(n) Oberfläche oder Oberflächen (26, 28, 44) in der Richtung einer Formposition vorgespannt ist oder sind und gegen die Vorspannung zu einer Freigabeposition bewegbar ist oder sind.

5. Method-Feeder-Formwerkzeug nach Anspruch 1, bei dem das Element einen konkaven Abschnitt (26, 28) umfasst, der so mit einer Seitenwand (36) auf dem Formwerkzeugkörper zusammenwirkt, dass die Formwerkzeugoberflächen bereitgestellt werden.

6. Method-Feeder-Formwerkzeug nach einem der vorhergehenden Ansprüche, bei dem der Formwerkzeugkörper zwei Rillen (46) an gegenüberliegenden Kanten des Formwerkzeughohlraums und allgemein in einer Ebene quer zu der Freigaberichtung zum Aufnehmen der gegenüberliegenden Enden eines Feeders im Gebrauch umfasst.

## Revendications

1. - Moule pour dispositif d'appât de pêche, comprenant un corps de moule ayant une surface ou des surfaces de moule (22) définissant une empreinte de moule ouverte (24), au moins une partie (26, 44) de la ou des surfaces étant mobile pour faciliter le démoulage, en utilisation, d'un dispositif d'appât de fond chargé (10, 11) à partir du moule ; **caractérisé par le fait que** la ou les surfaces mobiles (26, 28, 44) sont disposées sur un élément mobile de manière coulissante par rapport au corps de moule.

2. - Moule pour dispositif d'appât de pêche selon la revendication 1, dans lequel l'empreinte (24) est de forme généralement concave.

3. - Moule pour dispositif d'appât de pêche selon la revendication 1 ou la revendication 2, dans lequel l'empreinte (24) a une base arrondie à partir de laquelle se dresse une paroi latérale (36) de forme à côtés généralement parallèles et parallèle à l'axe de mouvement de la ou des surfaces mobiles (26, 28, 44).

4. - Moule pour dispositif d'appât de pêche selon l'une quelconque des revendications précédentes, dans lequel la ou les surfaces mobiles (26, 28, 44) sont sollicitées vers une position de moulage et mobiles à l'encontre la sollicitation vers une position de démoulage.

5. - Moule pour dispositif d'appât de pêche selon la revendication 1, dans lequel l'élément comprend une partie concave (26, 28) qui coopère avec une paroi latérale (36) sur le corps de moule pour fournir les surfaces de moule.

6. - Moule pour dispositif d'appât de pêche selon l'une quelconque des revendications précédentes, dans lequel ledit corps de moule comprend deux rainures (46) à des bords opposés de ladite empreinte de moule et généralement dans un plan transversal à la direction de démoulage, pour recevoir en utilisation les extrémités opposées d'un dispositif d'appât de pêche.
